# EUROPÄISCHE PATENTANMELDUNG

(11) **EP 0 618 450 A1**
(43) Veröffentlichungstag der Anmeldung: **05.10.1994**
(21) Anmeldenummer: 94103125.4
(22) Anmeldetag: 02.03.1994
(51) Int. Cl.: G01P 15/08, G01P 15/12, G01P 15/125

(54) **Beschleunigungssensor**

(30) Priorität: 30.03.1993 DE 4310352
(71) Anmelder: SIEMENS AKTIENGESELLSCHAFT, D-80333 München (DE)
(72) Erfinder: Biebl, Markus, Dipl.-Phys., D-81543 München (DE); Scheiter, Thomas, Dipl.-Ing., D-80469 München (DE); Klose, Helmut, Dr.-Ing., D-81929 München (DE)

(57) **Zusammenfassung**

Beschleunigungssensor, bei dem auf einem SOI-Substrat in der Siliziumschicht (1) ein Masseteil (2) an Federn (3) als mikromechanische Komponenten ausgebildet sind und bei dem Mittel wie z. B. Piezowiderstände (4) vorhanden sind, um eine Auslenkung des Masseteiles (2) infolge einer Beschleunigung des Substrates detektieren und in einer elektronischen Schaltung auswerten zu können.

## Beschreibung

Die vorliegende Erfindung betrifft einen Beschleunigungssensor auf SOI-Substraten für die genaue Messung extrem kleiner Beschleunigungen.

Moderne Navigationssysteme sowie Sicherheitssysteme im Automobilbereich erfordern zuverlässige, kleine und einfach herstellbare Beschleunigungssensoren mit einer hohen Meßgenauigkeit und einer guten Proportionalität zwischen Meßgröße und Ausgangssignal. Konventionell hergestellte Beschleunigungssensoren sind dagegen relativ groß, teuer und ungenau. Bisher wurden mikromechanische Beschleunigungssensoren eingesetzt, wie sie z. B. in der Veröffentlichung von R. T. Howe e. a.: "Silicon micromechanics: Sensors and actuators on a chip" IEEE Spectrum July 1990, S. 29 bis 35 beschrieben sind. Hierbei kommen allerdings für die Herstellung der mechanisch bewegten Teile der Sensoren Polysiliziumschichten zum Einsatz, deren mechanische Langzeitstabilität unter Umständen für die Lebensdauer der Systeme, in denen sie eingesetzt werden, nicht ausreicht. Neben der möglichen zeitlichen Degradation sind die mechanischen Eigenschaften wie Elastizitätsmodul und intrinsischer Stress der Schichten sensibel von den jeweiligen Herstellungsbedingungen abhängig. Die thermische Ausheilung des intrinsischen Stress der Schichten erfordert im Herstellungsprozeß zusätzliche Temperschritte, die sich nachteilig auf eine gleichzeitig gefertigte in den Sensor integrierte Elektronik auswirken. Außerdem sind lang dauernde und aufwendige Abscheidungen von Halbleiterschichten notwendig.

Aufgabe der vorliegenden Erfindung ist es, einen einfach herstellbaren Beschleunigungssensor für Messungen mit hoher Genauigkeit im Bereich bis 1 millionstel Erdbeschleunigung anzugeben, der eine größere mechanische Langzeitstabilität aufweist.

Diese Aufgabe wird mit dem Beschleunigungssensor mit den Merkmalen des Anspruches 1 gelöst. Weitere Ausgestaltungen ergeben sich aus den abhängigen Ansprüchen.

Der erfindungsgemäße Beschleunigungssensor vermeidet die genannten Nachteile der Verwendung von Polysiliziumschichten für die mechanisch bewegten Teile, indem für diese Teile einkristallines Silizium eingesetzt wird. Einkristallines Silizium besitzt genau bekannte mechanische Eigenschaften, die nicht von den jeweiligen Parametern des Herstellungsprozesses abhängen. Zudem sind die mechanischen Eigenschaften keiner zeitlichen Degradation unterworfen, so daß die Langzeitstabilität größer ist. Besonders vorteilhaft ist die Verwendung von SOI-Substraten, d. h. Silicon-on-insulator-Substrate. Bei derartigen Substraten befindet sich eine einkristalline Siliziumschicht auf einer Isolatorschicht. Der Hauptbestandteil dieser Substrate kann ein ebenfalls einkristalliner Siliziumkörper sein, so daß in diesem Fall zwei einkristalline Siliziumschichten durch eine dazwischenliegende Isolatorschicht getrennt sind. Bei dem erfindungsgemäßen Beschleunigungssensor unter Verwendung eines SOI-Substrates sind die mechanisch beweglichen Teile in der Siliziumschicht auf der Isolatorschicht ausgebildet. Unter dem entsprechend strukturierten Bereich der Siliziumschicht ist die Isolatorschicht entfernt, um die freie Beweglichkeit der mikromechanischen Teile zu ermöglichen.

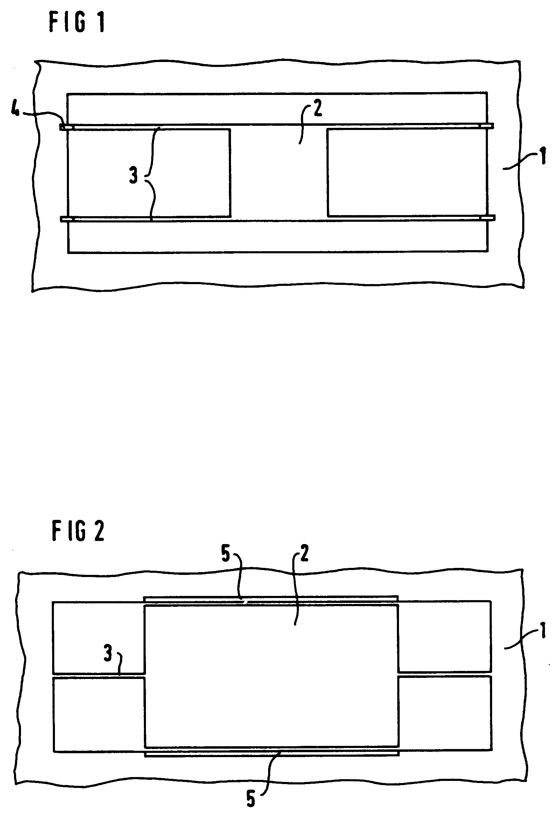

Es folgt eine Beschreibung von Ausführungsbeispielen des erfindungsgemäßen Sensors anhand der Figuren 1 bis 4, die verschiedene Beispiele jeweils in Aufsicht zeigen.

Fig. 1 zeigt die Struktur eines piezoresistiven Beschleunigungssensors auf einem SOI-Substrat in Aufsicht. Die Struktur der mechanischen Teile wurde aus der oberen einkristallinen Siliziumschicht 1 des Substrates herausgeätzt. Ein Masseteil 2 ist an einer oder mehreren Federn 3 aufgehängt und über diese Federn mit dem restlichen Teil der Siliziumschicht 1 verbunden. Dort wo die Federn 3 an der Siliziumschicht 1 befestigt sind, befinden sich Piezoresistoren 4, die bei einer Verformung ihren elektrischen Widerstand ändern. Die Siliziumschicht 1 ist ausreichend für elektrische Leitung dotiert, daß eine derartige Änderung des Widerstands dieser Piezoresistoren festgestellt werden kann. Die Piezoresistoren 4 können im Prinzip an jeder beliebigen Stelle der Federn 3, die verformt wird, angebracht sein. Es ist allerdings vorteilhaft, diese Piezoresistoren 4 an den Stellen anzubringen, an denen das Material der Siliziumschicht 1 bei einer Bewegung des Masseteiles 2 besonders stark verformt wird. Damit bei einer Beschleunigung des Substrates das Masseteil 2 aufgrund seiner Trägheit sich relativ zu dem Substrat bewegen kann, ist unter dem Masseteil 2 und unter den Federn 3 in einem für eine Beweglichkeit des Masseteiles 2 ausreichend großen Bereich die Isolatorschicht entfernt. Das Masseteil 2 kann außerdem mit Löchern versehen sein, um die Entfernung dieser Isolatorschicht bei der Herstellung zu erleichtern. Ist die Breite der Federn 3, d. h. ihre laterale Bemessung in der in Fig. 1 gezeigten Aufsicht, klein gegenüber ihrer Dicke, so liegt die Achse der Hauptempfindlichkeit des Sensors in der Ebene der Siliziumschicht 1. Ist umgekehrt die Breite der Federn 3 groß gegenüber ihrer Dicke, ist die Achse der Hauptempfindlichkeit des Sensors senkrecht zur Siliziumschicht 1. In Fig. 1 ist die Richtung einer zu detektierenden Beschleunigung senkrecht zu der Längsrichtung der Federn 3.

Fig. 2 zeigt die Struktur eines erfindungsgemäßen Beschleunigungssensors für kapazitive Messung in Aufsicht. Die mikromechanischen Elemente sind aus der oberen einkristallinen Siliziumschicht 1 des Substrates herausgeätzt. Das Masseteil 2 ist wie in dem vorhergehenden Ausführungsbeispiel an Federn 3 mit dem restlichen Anteil der Siliziumschicht 1 verbunden. Das Masseteil ist elektrisch leitend dotiert und bildet mit entsprechenden dotierten Bereichen in der Siliziumschicht 1, die dem Masseteil 2 gegenüberliegen und Gegenelektroden 5 bilden, jeweils einen Kondensator. Diese Kondensatoren sind so angeordnet, daß bei einer Bewegung des Masseteiles 2 senkrecht zu der Längsrichtung der Federn 3 die Kapazitäten der Kondensatoren infolge des geänderten Abstandes der Leiter sich ändern. Diese Änderung der Kapazitäten erfolgt bei den auf verschiedenen Seiten des Masseteiles 2 angeordneten Kondensatoren gegensinnig. Aus der Differenz der Kapazitätsänderungen der beiden Kondensatoren kann daher die Beschleunigung direkt bestimmt werden. Außerdem kann durch Anlegen einer entsprechenden Polarisationsspannung an die dotierten Bereiche der Kondensatoren die aufgrund einer Beschleunigung in der Ebene der Siliziumschicht 1 senkrecht zur Längsrichtung der Federn 3 wirkende Kraft kompensiert werden. Dadurch wird das Meßsignal sehr gut linearisiert, der Meßbereich erweitert und die Federkonstante der durch die Federn 3 gebildeten Aufhängung des Masseteiles 2 in erster Näherung vernachlässigbar. Diese Struktur eignet sich für die Detektion von Beschleunigungen in der Ebene der Siliziumschicht 1 senkrecht zu der Längsrichtung der Federn 3.

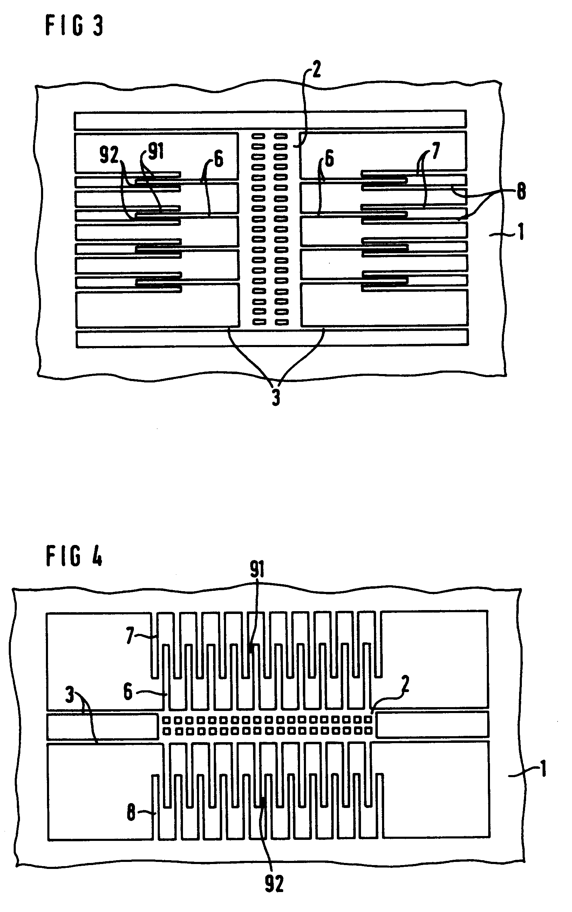

Fig. 3 zeigt die Struktur eines kapazitiv messenden Beschleunigungssensors, bei der die Kondensatoren durch fingerförmige Elektroden gebildet werden. Das Masseteil 2 ist an Federn 3 mit der restlichen Siliziumschicht 1 verbunden. Das Masseteil 2 ist hier mit Löchern gezeichnet, die die Funktion haben, bei der Herstellung die Isolatorschicht für das Wegätzen leichter zugänglich zu machen. An dem Masseteil 2 befinden sich fingerförmige Elektroden 6, die leitfähig dotiert sind. Die Elektroden 6 bilden mit entsprechenden fingerförmigen Elektroden 7, 8, die mit der restlichen Siliziumschicht 1 verbunden sind, Kondensatoren. Eine Beschleunigung des Masseteiles 2 in der Ebene der Siliziumschicht 1 senkrecht zu den Federn 3 bewirkt eine Kapazitätsänderung jeweils zwischen einer der fingerförmigen Elektroden 6 des Masseteils 2 und einer daneben angeordneten Elektrode 7, 8 an der Siliziumschicht 1. Vorteilhaft sind daher von den fingerförmigen Elektroden 7, 8, die mit der Siliziumschicht 1 verbunden sind, immer diejenigen Elektroden elektrisch leitend miteinander verbunden, die auf derselben Seite der benachbart angeordneten fingerförmigen Elektrode des Masseteiles 2 liegen (jeweils die Elektroden 7 und die Elektroden 8), so daß die jeweils auf einer Seite gebildeten Kondensatoren 91 bei einer Auslenkung des Masseteiles 2 ihre Kapazität gleichsinnig ändern und die auf der anderen Seite angeordneten Kondensatoren 92 gemeinsam ihre Kapazität gegensinnig dazu ändern. Aus der Differenz der Gesamtkapazitäten dieser jeweils zusammengefaßten Kondensatoren kann die Beschleunigung direkt bestimmt werden. Außerdem kann auch hier durch Anlegen einer entsprechenden Polarisationsspannung die aufgrund der Beschleunigung des Substrates wirkende Trägheitskraft kompensiert werden, so daß das Masseteil 2 relativ zu dem Substrat nicht bewegt wird. Dadurch wird das Meßsignal sehr gut linearisiert, der Meßbereich erweitert, und eine mögliche Änderung der Federkonstante bei größerer Auslenkung braucht in der Rechnung nicht berücksichtig zu werden. Diese Struktur ist wieder geeignet für die Detektion von Beschleunigungen in der Ebene der Siliziumschicht 1 senkrecht zu der Längsrichtung der Federn 3.

Fig. 4 zeigt die Struktur eines Beschleunigungssensors mit kapazitiver Messung, bei dem die Auslenkung des Masseteiles 2 in Längsrichtung der fingerförmigen Elektroden erfolgt. Eine Beschleunigung des Substrates wird auch hier senkrecht zu der Längsrichtung der das Masseteil 2 haltenden Federn 3 detektiert. Die an dem Masseteil 2 angebrachten fingerförmigen Elektroden 6 sind hier mit ihren Längsrichtungen senkrecht zur Längsrichtung der Federn 3 angeordnet. Die fingerförmigen Elektroden 7, 8, die mit der restlichen Siliziumschicht 1 verbunden die Gegenelektroden bilden, sind hier jeweils auf einer Seite des Masseteiles 2 elektrisch leitend miteinander verbunden (jeweils die Elektroden 7 und die Elektroden 8) und bilden so auf jeder Seite des Masseteiles 2 einen Interdigitalkondensator. Diese beiden Kondensatoren 91, 92 ändern ihre Kapazität bei einer Beschleunigung des Substrates und damit einer Auslenkung des Masseteiles 2 in der Ebene der Siliziumschicht 1 senkrecht zur Längsrichtung der Federn 3 gegensinnig. Aus der Differenz der Kapazitätsänderungen der beiden Kondensatoren 91, 92 kann die Beschleunigung direkt bestimmt werden. Außerdem kann durch Anlegen einer entsprechenden Polarisationsspannung die aufgrund der Beschleunigung wirkende Trägheitskraft kompensiert werden, so daß das Masseteil 2 nicht ausgelenkt wird. Die Linearisierung des Meßsignales und die oben erwähnten Vorteile ergeben sich daher auch hier.

Unabhängig von der jeweiligen Ausgestaltung der Ausführungsbeispiele umfaßt der erfindungsgemäße Beschleunigungssensor ein Masseteil, das an einer oder mehreren Federn aufgehängt ist, wobei das Masseteil und diese Federn in der Siliziumschicht eines SOI-Substrates ausgebildet sind. Das Verhältnis von Breite zu Dicke der Federn bestimmt die Richtung (senkrecht zur Längsrichtung der Federn) der Empfindlichkeit des Sensors. Eine Messung der auf das Masseteil wirkenden Trägheitskraft infolge einer Beschleunigung des Substrates läßt sich kapazitiv wesentlich genauer vornehmen als mittels eines Piezowiderstandes. Ein derartig kapazitiv messender Beschleunigungssensor ist weniger von der Temperatur abhängig. Außerdem lassen sich diese Sensoren leichter in größerer Stückzahl bei geringen Toleranzen herstellen. Die kapazitive Messung hat außerdem den Vorteil, daß durch Anlegen von entsprechenden Potentialen an die Elektroden der Kondensatoren die auftretenden Trägheitskräfte durch elektrostatische Kräfte kompensiert werden können. Grundsätzlich ist es möglich, mit einer entsprechenden Ausführungsform des erfindungsgemäßen Beschleunigungssensors auch Beschleunigungen senkrecht zur Ebene der Siliziumschicht kapazitiv zu messen. Für den Vorteil einer Auswertung der Differenz der Kapazitätsänderungen auf beiden Seiten des Masseteiles ist dann allerdings eine Gegenelektrode oberhalb des Masseteiles zusätzlich zu einer Substratelektrode erforderlich. Diese Gegenelektrode, die die Messung vereinfacht, kann z. B. durch eine weitere Schicht gebildet werden, die durch Aufbringen einer Polysiliziumschicht auf das SOI-Substrat hergestellt wird.

Der erfindungsgemäße Sensor wird hergestellt, indem ein SOI-Substrat entsprechend der Struktur der elektrischen Leiter für die Piezoresistoren bzw. die Kondensatoren und ihre Anschlüsse elektrisch leitend dotiert wird. Die Siliziumschicht wird dann strukturiert, was z. B. durch ein lithographisches Verfahren geschieht (z. B. Elektronenstrahllithographie). Die mikromechanischen Teile werden gebildet, indem die dazwischen befindlichen Teile der Siliziumschicht in einem Ätzprozeß (z. B. anisotrope Trockenätzung) entfernt werden. Das unter der hergestellten Struktur befindliche Material der Isolatorschicht (z. B. SiO₂) wird durch einen Ätzprozeß (z. B. naßchemisch) entfernt. Um das möglicherweise bei naßchemischer Ätzung auftretende Adhäsionsproblem zu lösen, können sublimierende Chemikalien (z. B. Cyclohexan oder Dichlorbenzol) eingesetzt werden. Bei gleichzeitiger Fertigung von Sensor und elektronischer Schaltung integriert in einem gemeinsamen SOI-Substrat wird zuerst die elektronische Schaltung bis zu ihrer Metallisierung hergestellt. Die nicht zum Sensor gehörenden Teile des Substrates werden mit einer Schutzschicht, z. B. Fotolack, überzogen, die mikromechanischen Elemente hergestellt und anschließend die Schutzschicht entfernt.

Bei dem erfindungsgemäßen Beschleunigungssensor entfällt bei der Herstellung die Abscheidung einer zusätzlichen Schicht, wozu der Herstellungsprozeß vereinfacht wird. Außerdem ist keine Temperung zur Ausheilung des intrinsischen Stress erforderlich. Ein in dem Substrat integrierter elektronischer Teil wird in seinen Eigenschaften daher durch die Fertigung des Sensorteils überhaupt nicht beeinflußt. Daher können für den Elektronikteil modernste Herstellungsprozesse mit entsprechend kleinen Strukturgrößen zum Einsatz kommen. Daher können Sensoren mit integrierter Elektronik mit extrem kleinen Abmessungen hergestellt werden. Der gesamte Herstellungsprozeß wird vereinfacht. Eine Anordnung mehrerer Sensoren als Sensorarray für Detektion der Beschleunigung in drei orthogonalen Raumrichtungen ist auf einfache Weise möglich. Hohe Meßgenauigkeit auch bei geringsten Beschleunigungen und gleichzeitig hohe Langzeitstabilität sind gewährleistet.

## Patentansprüche

1. Beschleunigungssensor,
bei dem auf einem SOI-Substrat in der kristallinen Siliziumschicht (1) ein Masseteil (2) an einer oder mehreren Federn (3) ausgebildet ist,
bei dem die Isolatorschicht in einem Bereich entfernt ist, der für eine freie Beweglichkeit des Masseteils (2) ausreichend groß ist und
bei dem Mittel zur Feststellung einer Auslenkung des Masseteiles (2) aus einer Ruhelage und eine elektronische Schaltung vorhanden sind, die beim Auftreten einer aus einer Beschleunigung des Substrates resultierenden Trägheitskraft auf das Masseteil (2) daraus die Größe dieser Beschleunigung bestimmt.

2. Beschleunigungssensor nach Anspruch 1,
bei dem zur Feststellung der Trägheitskraft Piezoresistoren (4) mit elektrischen Anschlüssen in den Federn (3) vorhanden sind.

3. Beschleunigungssensor nach Anspruch 1,
bei dem das Masseteil (2) elektrisch leitfähig dotiert und über die Federn (3) elektrisch leitend mit der restlichen Siliziumschicht (1) verbunden ist und
bei dem für kapazitive Messungen der Trägheitskraft dem Masseteil (2) gegenüberliegende Bereiche des Substrates als Gegenelektroden (5) elektrisch leitfähig dotiert sind.

4. Beschleunigungssensor nach Anspruch 1,
bei dem das Masseteil (2) in der Ebene der Siliziumschicht (1) beweglich ist,
bei dem das Masseteil (2) elektrisch leitfähig dotiert und über die Federn (3) elektrisch leitend mit der restlichen Siliziumschicht (1) verbunden ist und
bei dem das Masseteil (2) fingerförmige Elektroden (6) aufweist, die mit fingerförmigen Elektroden (7, 8) an der restlichen Siliziumschicht (1) und zugehörigen elektrischen Anschlüssen Kondensatoren (91, 92) für kapazitive Messung der Trägheitskraft bilden.

5. Beschleunigungssensor nach Anspruch 4,
bei dem auf zwei einander gegenüberliegenden Seiten des Masseteils (2) fingerförmige Elektroden (6) vorhanden sind,
bei dem das Masseteil (2) in der Längsrichtung dieser fingerförmigen Elektroden (6) beweglich ist und
bei dem die an der restlichen Siliziumschicht (1) vorhandenen fingerförmigen Elektroden (7, 8) auf jeder Seite des Masseteils (2) untereinander elektrisch verbunden sind und mit den auf derselben Seite befindlichen fingerförmigen Elektroden (6) des Masseteils (2) jeweils einen Kondensator (91, 92) bilden.

6. Beschleunigungssensor nach Anspruch 4,
bei dem auf zwei einander gegenüberliegenden Seiten des Masseteils (2) fingerförmige Elektroden (6) vorhanden sind,
bei dem das Masseteil (2) senkrecht zur Längsrichtung dieser fingerförmigen Elektroden (6) beweglich ist und
bei dem die an der restlichen Siliziumschicht (1) vorhandenen fingerförmigen Elektroden (7, 8) auf jeder Seite des Masseteils (2) derart elektrisch miteinander verbunden sind, daß sie mit den jeweils angrenzenden fingerförmigen Elektroden (6) des Masseteils (2) in der Ebene der Siliziumschicht (1) in beiden Richtungen senkrecht zu ihrer Längsrichtung je einen Kondensator (91, 92) bilden.
